Europäisches Patentamt

European Patent Office

Office européen des brevets

(11) Veröffentlichungsnummer: **0 000 713**
**B1**

# EUROPÄISCHE PATENTSCHRIFT

(45) Veröffentlichungstag der Patentschrift:
27.01.82

(51) Int. Cl.³: **B 65 D 83/06**, A 01 C 7/02,
A 01 C 15/02

(21) Anmeldenummer: 78100441.1

(22) Anmeldetag: 19.07.78

(54) Vorrichtung zur Bevorratung und Abgabe von Kleinteilen und/oder zum Streuen von körnigem Gut.

(30) Priorität: 25.07.77 DE 2733436
04.07.78 DE 7820059 U

(43) Veröffentlichungstag der Anmeldung:
21.02.79 Patentblatt 79/4

(45) Bekanntmachung des Hinweises auf die Patenterteilung:
27.01.82 Patentblatt 82/4

(84) Benannte Vertragsstaaten:
BE CH DE FR GB LU NL SE

(56) Entgegenhaltungen:
CH-A-335 712
FR-A-830 631
FR-A-2 019 103
GB-A-1 112 343
US-A-1 632 540
US-A-2 014 003

(73) Patentinhaber: Fritz Schäfer Gesellschaft mit
beschränkter Haftung Fabriken für Lager- und
Betriebseinrichtungen, Salchendorf bei Neunkirchen
Kreis Siegen Fritz-Schäfer-Strasse 20,
D-5908 Neunkirchen (DE)

(72) Erfinder: Gaffron, Wolfram, Hölderlinstrasse 22,
D-5900 Siegen 21 (DE)

(74) Vertreter: Hemmerich, Friedrich Werner et al,
Hammerstrasse 2, D-5900 Siegen 1 (DE)

Vorrichtung zur Bevorratung und Abgabe von Kleinteilen und/oder zum Streuen von körnigem Gut

Die Erfindung betrifft eine Vorrichtung zur Bevorratung und Abgabe von Kleinteilen und/oder zum Streuen von körnigem Gut, insbesondere Salz, Sand, Dünger, Samen oder dergleichen, bestehend aus einem das Gut aufnehmenden Behälter mit einem als Rutsche ausgebildeten Boden und mindestens einer an der Rutsche anschließenden Auslauf- und/oder Streuöffnung, die einem bestimmten Umfangsbereich des Behälters zugeordnet und von einer ihrem freien Ende radial nach auswärts gerichteten Schaufel untergriffen ist.

Eine durch die FR-A-2 019 103 bekanntgewordene Vorrichtung dieser Art dient als Einwegverpackungsbehälter für streuförmige Stoffe wie zum Beispiel Düngemittel, Unkrautvernichtungsmittel und dergleichen. In einer Wand des Verpackungsbehälters, und zwar nahe des unteren Behälterrandes, sind über deren Breite verteilte Austrittsöffnungen vorgesehen. Unterhalb dieser Austrittsöffnungen befindet sich eine geneigte flächige schaufelförmige Verteileinrichtung. Die Neigung der Schaufel ist so gewählt, daß das Streugut nach Freigabe der Austrittsöffnungen aus dem Behälter über die Schaufel abfließt ohne daß eine Streubewegung erforderlich ist. Die Breite der Streuung wird ausschließlich durch entsprechende Gestaltung der Schaufel, die auswechselbar sein kann, bestimmt.

Dieser Verpackungsbehälter ist, abgesehen davon, daß er nicht zur wiederholten Verwendung bestimmt ist, aus verschiedenen Gründen nachteilig. Mit der schaufelartigen Verteilvorrichtung ist nur eine geringe Streubreite erzielbar. Außerdem kann die Austrittsmenge nicht variiert werden. Schließlich läßt sich der Ausfluß des Streumittels nicht unterbrechen, es sei denn, der Behälter wird so gekippt, daß die schaufelförmige Verteilvorrichtung eine waagerechte oder annähernd waagerechte Lage einnimmt. Für die großflächige Verteilung beispielsweise von Streusalz auf Gehwegen ist der bekannte Verpackungsbehälter jedenfalls nicht geeignet.

Durch die US-A-2 014 003 ist ein mit einem Tragegriff versehenes Düngewerkzeug für einzelne Pflanzen bekannt. Dieses Düngewerkzeug ist dabei als sich nach unten konisch verjüngender Behälter gestaltet, dessen unteres Ende eine solche Verformung aufweist, daß eine ringsegmentartige Austrittsöffnung entsteht. Diese Austrittsöffnung wird normalerweise durch eine federbelastete Klappe geschlossen gehalten. Die Öffnung kann nur dadurch freigegeben werden, daß die Klappe auf den Boden aufgesetzt und anschließend der Behälter relativ dazu entgegen der Federkraft gekippt wird.

Der Austritt des Düngers aus der etwa ringsegmentförmigen Öffnung des Behälters ist bei diesem Düngewerkzeug also davon abhängig, daß einerseits die federbelastete Verschlußklappe auf den Boden abgestützt wird und andererseits durch ein Neigen des Vorratsbehälters relativ zu dieser dem Dünger unter der Wirkung seines Eigengewichts Gelegenheit gegeben wird auszufließen. Dabei erfolgt aber die Abgabe des Düngers nur auf einem durch die ringsegmentförmige Austrittsöffnung eng begrenzten Bereich.

Der Erfindung liegt die Aufgabe zugrunde, die den vorstehend beschriebenen Vorrichtungen eigentümlichen Unzulänglichkeiten zu beseitigen und eine Vorrichtung der gattungsgemäßen Art zu schaffen, die bei einfachem Aufbau eine relativ großflächige und trotzdem gezielte Verteilung verhältnismäßig großer Gutmengen ermöglicht.

Die Lösung dieser Aufgabe besteht nach der Erfindung im wesentlichen darin, daß die Dosierschaufel horizontal verläuft oder geringfügig gegenüber der Horizontalen nach unten geneigt ist, daß der Behälter mit einer Einfüllöffnung versehen ist und daß am oberen Ende des Behälters ein Bügelgriff angebracht ist, der ein Drehen des Behälters um seine Vertikalachse erlaubt.

Eine derart ausgebildete Vorrichtung hat den Vorteil, daß sie wiederholt verwendbar ist und daß das Gut nicht ungehindert aus dem Behälter ausfließen kann, sondern vielmehr nur dann abgegeben wird, wenn das vor der Auslauf- und/oder Streuöffnung auf der Dosierschaufel liegende Gut entfernt wird. Bei der Verteilung von Streugut beispielsweise Salz, Dünger und Sand, geschieht das durch Drehen des Behälters um seine Vertikalachse. Durch die dabei erzeugte Fliehkraft wird das Streugut von der Dosierschaufel weggeschleudert, so daß weiteres Streugut aus der Auslauf- und/oder Streuöffnung austreten kann.

Als besonders zweckmäßig hat es sich erwiesen, wenn die Rutsche sich von der Auslauf- und/oder Streuöffnung aus mit gleichbleibender Neigung über den gesamten Behälterquerschnitt erstreckt. Hierbei hat es sich als vorteilhaft gezeigt, wenn das untere Ende der Rutsche mit dem benachbarten Umfangsbereich des Behälters eine etwa segment- oder linsenquerschnittsförmige Auslauf- und/oder Streuöffnung begrenzt, unterhalb der das freie Ende der Dosierschaufel liegt.

Damit die Austrittsmenge des zu verteilenden Gutes variiert werden kann, ist es in jedem Falle von Vorteil, wenn erfindungsgemäß die Dosierschaufel relativ zur Auslauf- und/oder Streuöffnung höhen- und/oder neigungsverstellbar ist. Hierbei läßt sich die Dosierschaufel durch Federkraft auf einstellbarem Abstand von der Auslauf- und/oder Streuöffnung halten und entgegen der Kraft der Feder als Verschlußglied gegen die Auslauf- und/oder Streuöffnung anlegen.

Um bei einer erfindungsgemäßen Vorrichtung zu erreichen, daß die Stellmittel für die Öffnungsweite der Auslauf- und/oder Streuöffnung jederzeit zugänglich sind und um dabei eine leichte und feinfühlige Betätigung zu ermöglichen, und zwar auch dann, wenn der Behälter zur Bevorratung und Abgabe von Kleinteilen an Montageplätzen aufgestellt wird, ist vorgesehen, daß die Auslauf- und/oder Streuöffnung in einer Seitenwand am unteren Ende des im Querschnitt polygonförmigen Behälters ausgebildet sowie durch einen parallel zu dieser Seitenwand bewegbaren Schieber verschließbar oder in ihrer Größe stufenlos veränderbar ist.

Es hat sich dabei als besonders zweckmäßig herausgestellt, wenn die Auslauf- und/oder Streuöffnung schmaler als die sie aufweisende Seitenwand des Behälters ausgebildet ist und die innerhalb des gesamten Gehäusequerschnitts auf die Auslauf- und/oder Streuöffnung zu geneigte Rutsche im Anschluß an die Auslauf- und/oder Streuöffnung seitlich und nach oben gerichtete zwickelartige Leitflächen trägt, die mit ihrem unteren Ende bis an die Dosierschaufel heranreichen.

Ferner kann der Schieber in einer von einem auf der Gehäuseaußenseite sitzenden Rahmen begrenzten Führung laufen und über einen aus einer Gewindespindel und einer Rändelmutter oder dergleichen bestehenden Stellantrieb bewegbar sein.

Nach einem weiterbildenden Merkmal der Erfindung ist vorgesehen, daß das an die Rutsche anschließende freie Ende der Dosierschaufel vom unteren Schenkel des Rahmens gebildet wird.

Insbesondere dann, wenn die Vorrichtung zur Bevorratung und Abgabe von Kleinteilen auf Montageplätzen aufgestellt wird, ist es von wesentlicher Bedeutung, dem Behälter einen plattenartigen Untersatz zuzuordnen, der einerseits mit auf seiner Oberseite sitzenden Nocken und/oder Stegen fixierend in einen fußseitigen Zargenrand des Behälters eingreift und andererseits eine an die Dosierschaufel des Behälters anschließende Verlängerung aufweist. Hierbei kann die Verlängerung des Untersatzes als durch Seitenwände begrenzte, gegen die Dosierschaufel abgesetzte Mulde ausgebildet sein, welche eine griffgünstige Entnahme der aus dem Behälter austretenden Kleinteile ermöglicht.

Damit eine ergonomisch günstige Aufstellung auch mehrerer erfindungsgemäßer Vorrichtungen an Montageplätzen erreicht werden kann, wird der Untersatz in seinem hinteren Teilbereich der Umrißform des Zargenrandes des Behälters angepaßt, während seine Verlängerung sich trapezartig verjüngt. Hierdurch ist es entweder möglich, mehrere Vorrichtungen in Reihe unmittelbar nebeneinander aufzustellen oder aber sie längs einer Krümmungslinie nebeneinander aufzubauen.

Anhand der Zeichnung soll der Gegenstand der Erfindung nunmehr ausführlich beschrieben werden. Es zeigt

Fig. 1 einen Vertikalschnitt durch eine erfindungsgemäße Streuvorrichtung,

Fig. 2 einen Schnitt durch die Streuvorrichtung nach Fig. 1 längs der Linie II-II,

Fig. 3 in größerem Maßstab eine gegenüber Fig. 1 etwas abgewandelte Ausführungsform einer erfindungsgemäßen Streuvorrichtung,

Fig. 4 in räumlicher Ansichtsdarstellung den Grundaufbau einer anderen Ausführungsform einer erfindungsgemäßen Streuvorrichtung,

Fig. 5 einen Vertikalschnitt längs der Linie V-V in Fig. 4,

Fig. 6 einen Horizontalschnitt längs der Linie VI-VI in Fig. 5,

Fig. 7 eine Ausschnittsvergrößerung des in Fig. 4 mit VII gekennzeichneten Bereichs,

Fig. 8 eine Ausschnittsvergrößerung des in Fig. 4 mit VIII gekennzeichneten Bereichs,

Fig. 9 in räumlicher Draufsichtdarstellung einen fußartigen Untersatz zur Verwendung in Verbindung mit der Streuvorrichtung nach Fig. 4,

Fig. 10 in schematischer Draufsichtdarstellung die Reihenanordnung mehrerer Untersätze nach Fig. 9 zur Bildung einer Vorrichtung zur Bevorratung und Abgabe von Kleinteilen an Montageplätzen und

Fig. 11 in schematischer Draufsichtdarstellung die Nebeneinanderanordnung mehrerer Untersätze nach Fig. 9 zwecks Bildung einer Vorrichtung zur Bevorratung und Abgabe von Kleinteilen an Montageplätzen.

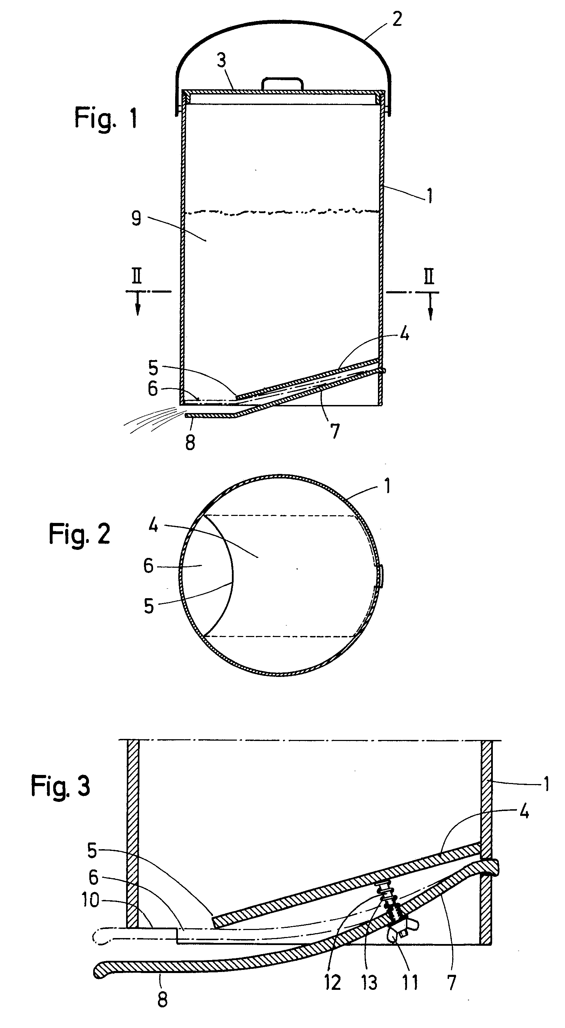

Die in den Fig. 1 und 2 dargestellte Streuvorrichtung besteht aus einem etwa trommel- oder topfförmigen Behälter 1, der an seinem oberen Ende mit einem vorzugsweise umlegbaren Bügelgriff 2 versehen ist und dessen Einfüllöffnung durch einen Deckel 3 verschlossen werden kann.

Der Boden des Behälters wird durch eine geneigte Rutsche 4 gebildet, die mit einem Ende 5 einen derartigen Abstand von der Wandung des Behälters 1 hat, so daß eine etwa segment- oder linsenquerschnittsförmige Auslauf- und/oder Streuöffnung 6 gebildet wird.

Unterhalb der Rutsche 4 ist in dem der Auslauf- und/oder Streuöffnung 6 gegenüberliegenden Umfangsbereich des Behälters 1 eine Dosierschaufel 8 mit einem Befestigungsabschnitt 7 aufgehängt, die mit ihrem freien horizontalen oder schwach geneigten Ende die Auslauf- und/oder Streuöffnung 6 auf ihrem gesamten Öffnungsquerschnitt untergreift.

Dabei ist die Dosierschaufel 8 so aufgehängt, daß sie beim Abstellen des Behälters 1 auf dem Boden nach oben geschwenkt wird und dadurch selbsttätig die Auslauf- und/oder Streuöffnung 6 verschließt, wie dies durch gestrichelte Linie angedeutet ist.

Wird jedoch der Behälter 1 mit Hilfe des Bügelgriffs 2 hochgehoben, dann schwenkt die Dosierschaufel 8 in die Stellung nach unten, welche in Fig. 1 durch voll ausgezogene Linie gezeigt ist. Hierdurch rutscht das im Behälter 1 enthaltene Streugut durch die Auslauf- und/oder Streuöffnung 6 auf den freien Endabschnitt der Dosierschaufel 8 und bleibt dort zunächst liegen.

Wird sodann der Behälter 1 durch leichtes Drehen der Hand am Bügelgriff 2 um seine vertikale Achse bewegt, dann wirkt eine gewisse Zentrifugalkraft auf das von der Dosierschaufel 8 getragene Streugut ein, so daß dieses nach vorne und nach der Seite hin von der Dosierschaufel 8 beziehungsweise derem vorderen Endabschnitt herunterrutscht und verteilt wird. Die Streubreite des Streugutes 9 kann dabei durch die Stärke der Handdrehung am Griffbügel 2 leicht beeinflußt werden. Je intensiver die Drehung am Griffbügel 2 ist, desto größer ist auch unter der entstehenden Zentrifugalkraft die Streubreite für das Streugut 9.

Die in Fig. 3 dargestellte Ausführungsform einer Streuvorrichtung unterscheidet sich von derjenigen nach Fig. 1 im wesentlichen dadurch, daß der freie Endabschnitt der Dosierschaufel 8 um ein gewisses Maß über den Außenumfang des Behälters 1 vorsteht und damit eine größere Streuweite ermöglicht. Damit trotzdem beim Abstellen des Behälters 1 auf dem Boden die Auslauf- und/oder Streuöffnung 6 verschlossen wird, ist der Behälter 1 an seinem unteren Umfangsrand mit einem Ausschnitt 10 versehen, welchen die hochgeschwenkte Dosierschaufel 8 durchgreifen kann, wie das durch gestrichelte Linien in Fig. 3 angedeutet ist.

Abweichend von Fig. 1 ist beim Ausführungsbeispiel nach Fig. 3 die Dosierschaufel 8 durch eine Knebel- oder Flügelmutter 11 unterstützt, welche auf einem an der Rutsche 4 befestigten Gewindebolzen 12 verstellbar ist. Durch Betätigen der Knebel- oder Flügelmutter 11 läßt sich daher die Abwärtsbewegung der Dosierschaufel 8 und damit die Durchtrittshöhe für das Streugut zwischen dem freien Endabschnitt der Dosierschaufel 8 sowie der Auslauf- und/oder Streuöffnung 6 unterschiedlich einstellen.

Eine den Gewindebolzen 12 umgebende Druckfeder 13 kann vorgesehen werden, damit diese die Dosierschaufel 8 zwangsweise in Öffnungslage drückt, sobald der Behälter 1 vom Boden abgehoben wird.

Für die Handhabung der in den Fig. 1 bis 3 dargestellten Streuvorrichtungen ist es besonders zweckmäßig, wenn der Bügelgriff 2 so am Behälter 1 gelagert wird, daß er die gleiche Radiallage zu diesem hat, wie die Dosierschaufel 8. Auf diese Art und Weise läßt sich der Behälter 1 mit natürlicher Griffhaltung der Hand aufnehmen und zur Erzielung des Streueffektes um seine Längsachse begrenzt winkelverdrehen.

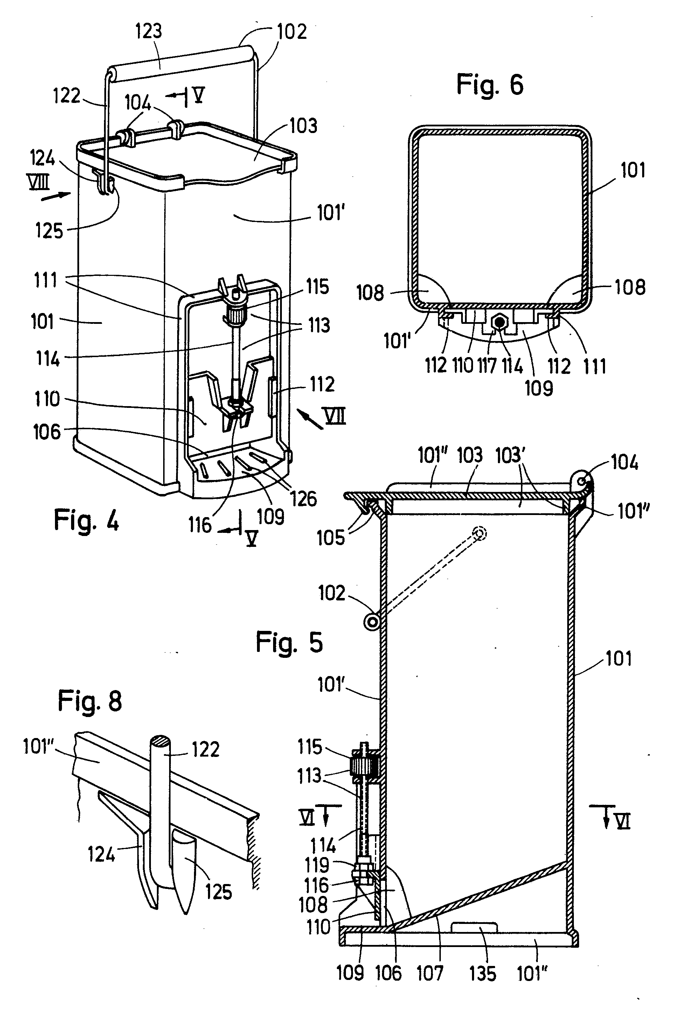

Die in den Fig. 4 bis 6 dargestellte Vorrichtung zur Bevorratung und Abgabe von Kleinteilen und/oder zum Streuen von körnigem Gut weist einen im Querschnitt polygonförmigen Behälter 101 auf, welcher in der Nähe seines oberen Endes mit einem umlegbaren Bügelgriff 102 ausgestattet ist und dessen Einfüllöffnung durch einen Klappdeckel 103 verschlossen werden kann, welcher über Scharniere 104 mit dem Behälter 101 verbunden ist. Eine schnepperartige Rastvorrichtung 105 zwischen dem Klappdeckel 103 und dem Rand der Einfüllöffnung des Behälters 101 dient zur Sicherung des Klappdeckels in seiner Schließlage. Dabei liegt der Klappdeckel 103 in einem die Einfüllöffnung des Behälters 101 begrenzenden Zargenrand 101″, welcher einen Teil seiner Höhe schräg nach abwärts zum Behälterinneren hin geneigte Flächen hat. Um trotzdem eine gute Abdichtung der Einfüllöffnung zu erreichen, ist es vorteilhaft, den Klappdeckel 103 an seiner Unterseite mit rahmenartig angeordneten Stegen 103′ zu versehen, die sich über die ganze Höhe des Zargenrandes 101″ erstrecken und dem lichten Querschnitt des Behälters unmittelbar unterhalb des Zargenrandes 101″ angepaßt sind.

Am unteren Ende des Behälters 101 befindet sich in der vorderen Behälterwand 101′ eine Auslauf- und/oder Streuöffnung 106, deren Breite kleiner als die Breite der Behälterwand 101′ ist.

Der Boden des Behälters 101 wird durch eine geneigte Rutsche 107 gebildet, die sich über den gesamten Gehäusequerschnitt erstreckt sowie zur Auslauf- und/oder Streuöffnung 106 hin geneigt verläuft. Seitlich neben der Auslauf- und/oder Streuöffnung 106 befinden sich auf der Rutsche 107 nach oben gerichtete zwickelartige Leitflächen 108, die mit ihrem unteren Ende jeweils bis an die Dosierschaufel 109 heranreichen, welche sich unmittelbar an die Rutsche 107 anschließt und nach vorne um ein gewisses Maß über die Behälterwand 101′ vorsteht. Die Dosierschaufel 109 und der untere Begrenzungsrand des Behälters 101 sind gemeinsam durch einen zargenartigen Rand 101″ stabilisiert.

Der Auslauf- und/oder Streuöffnung 106 ist ein parallel zur Behälterwand 101′ bewegbarer Schieber 110 zugeordnet, mittels dem die Auslauf- und/oder Streuöffnung 106 verschließbar sowie in ihrer Größe bedarfsweise stufenlos veränderbar ist. Dieser Schieber 110 wird in einem an die Außenseite der Behälterwand 101′ angeformten Rahmen 111 in Vertikalrichtung verschiebbar geführt und durch von der Innenseite des Rahmens 111 abstehende Leisten 112 mit der Behälterwand 101′ in Kontaktberührung gehalten.

Ein Stelltrieb 113 für den Schieber 110 besteht aus einer Gewindespindel 114 und einer damit in Eingriff stehenden Rändelmutter 115. Die Gewindespindel 114 wird dabei vorzugsweise vom Schaft einer Mehrkant-, insbesondere Sechskantschraube gebildet, deren Kopf 116 mit zwei zueinander parallelen Mehrkantflächen unterhalb einer an den Schieber 110 angeformten, nach vorne gabelartig offenen Halteklaue 117 drehfest zwischen zwei Widerlagerflächen 118 am Schieber 110 eingreift. Durch eine Gegenmutter 119, die von oben auf einen im Durchmesser größeren Gewindeabschnitt 114′ der Gewindespindel 114 geschraubt ist, wird diese an der Halteklaue 117 des Schiebers 110 sicher festgelegt.

Das obere Ende der Gewindespindel 114 durchgreift mit einem Gewindeabschnitt 114′ kleineren Durchmessers zwei Lageraugen 120 und 121, welche an die Behälterwand 101' angeformt sind und zwischen denen die Rändelmutter 115 drehbar lagert. Durch Drehung der Rändelmutter 115 wird also die Gewindespindel 114 in Axialrichtung verschoben und daher auch der mit ihr durch Verklemmen in Verbindung gehaltene Schieber 110 entsprechend bewegt. Die Einstellung des Schiebers 110 über den Stelltrieb 113 kann dabei leicht und sicher erfolgen, während die Streuvorrichtung auf einer Stützfläche, beispielsweise auf dem Boden, ruht.

Als besonders vorteilhaft hat es sich erwiesen, wenn der Behälter 101, der Klappdeckel 103, der Schieber 110 und die den Stelltrieb 113 bildenden Teile, nämlich die Gewindespindel 114, die Rändelmutter 115 und die Gegenmutter 119, aus Kunststoff-Formteilen bestehen. Der am Behälter 101 angelenkte Bügelgriff 102 kann hingegen einen metallischen, zum Beispiel aus Draht geformten Bügel und einen ebenfalls aus Kunststoff bestehenden Griffteil 123 aufweisen.

Im Anlenkbereich des Bügelgriffs 102 werden an den Behälter 101 zweckmäßigerweise Anschläge 124 angeformt, die den Bügelgriff 102 in seiner aufgerichteten Stellung stützen. Andererseits können dort aber noch Rastklauen 125 angeformt sein, durch die verhindert wird, daß der Bügelgriff 102 wieder unbeabsichtigt nach vorn herunterklappt.

Auf der Dosierschaufel 109 sind Rippen 126 strahlenförmig angeordnet.

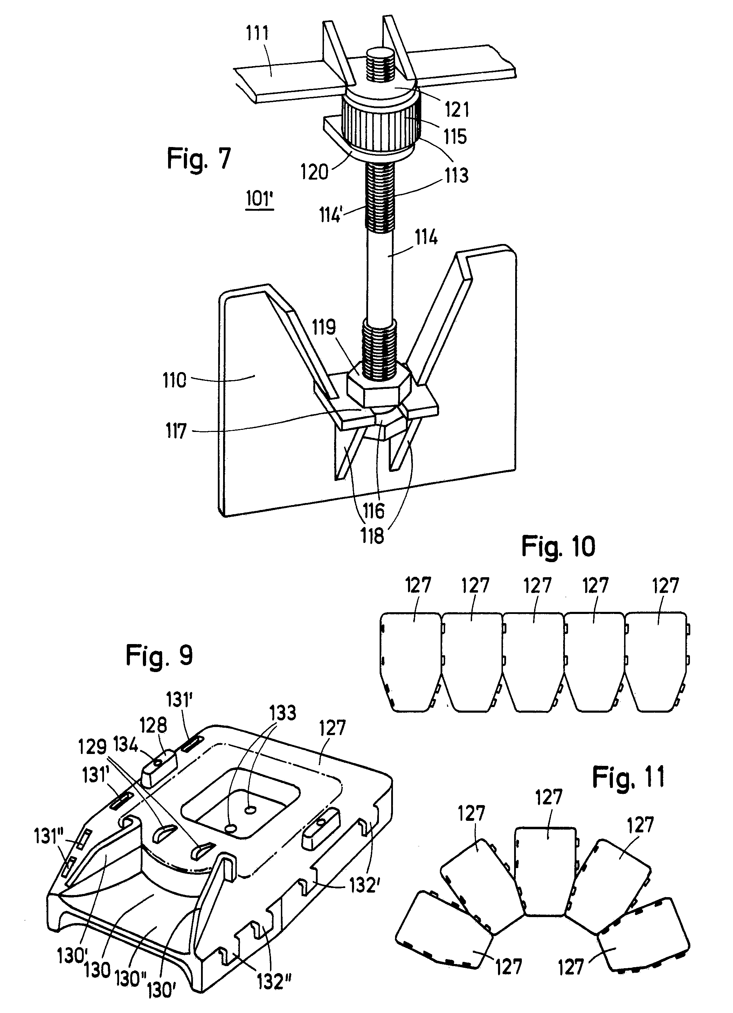

In Fig. 9 ist ein plattenartiger Untersatz 127 dargestellt, der ebenfalls als Formteil aus Kunststoff gefertigt werden kann. Dieser Untersatz ist einerseits auf seiner Oberseite mit Nocken 128 sowie andererseits noch mit Stegen 129 ausgestattet, mt welchen der Behälter 101 über seinen fußseitigen Zargenrand 101'' fixierend in Eingriff gebracht werden kann.

Der Untersatz 127 ist dabei in seinem hinteren Teilbereich der Umrißform des am Behälter 101 ausgebildeten Zargenrandes 101'' angepaßt und weist andererseits eine nach vorne gerichtete Verlängerung 130 auf, die sich trapezförmig verjüngt. Wenn der Behälter 101 auf den Untersatz 127 gestellt wird, schließt sich die Verlängerung 130 des Untersatzes 127 an die Dosierschaufel 109 des Behälters 101 an. Dabei ist es vorteilhaft, wenn die Verlängerung 130 des Untersatzes 127 eine gegen die Dosierschaufel 109 abgesetzte Mulde 130'' enthält, die durch Seitenwände 130' begrenzt wird, welche sich seitlich neben der Dosierschaufel 109 mit abgewinkelten Abschnitten gegen die Seitenwand 101 des Behälters 101 anlegen.

Wie aus Fig. 10 ersichtlich ist, lassen sich mehrere Untersätze 127 in einer Reihe dicht nebeneinander auf eine Stützfläche, beispielsweise eine Tischplatte setzen und dabei mit dieser durch Schrauben lagesicher verbinden, welche beispielsweise Löcher 133 (Fig. 9) in den Untersätzen 127 durchdringen.

Es können aber auch mehrere Untersätze 127 längs einer bogenförmigen Linie unmittelbar nebeneinander sitzen, wie das aus Fig. 11 hervorgeht. Auch in diesem Falle lassen sich diese Untersätze 127 auf einer Stützfläche, beispielsweise auf einer Tischplatte befestigen.

Möglich ist es aber auch, die Untersätze 127 mit den einzelnen Behältern 101 zu verbinden.

Um das zu erreichen, weisen einerseits deren Nocken 128 jeweils Löcher 134 auf, während an den Behälter 101 im Anschluß an seinen unteren Zargenrand 101'' Nocken 135 angeformt sind, die den Löchern 134 entsprechende Löcher enthalten. Durch Eindrehen von Schrauben in die Löcher der Nocken 128 und 135 werden dann die Untersätze 127 nach Art von Schuhen mit dem Behälter verbunden.

Um auch in diesem Falle ein dichtes Nebeneinanderstellen mehrerer, mit Untersätzen 127 verbundener Behälter 101 zu ermöglichen und damit eine gegenseitige Lagensicherung derselben zu erhalten, weist jeder der Untersätze 127 an seiner einen Längskante mehrere Rastschlitze 131' und 131'' und an seiner anderen Längskante eine entsprechende Anzahl von Rasthaken 132' und 132'' auf.

Sollen mehrere Behälter 101 in der aus Fig. 10 ersichtlichen Anordnung nebeneinandergestellt und gegeneinander fixiert werden, dann kommen jeweils die Rasthaken 132' eines Untersatzes 127 mit den Rastschlitzen 131' des benachbarten Untersatzes 127 von oben her in Formschlußeingriff. Ist hingegen eine Aufstellung mehrerer Behälter 101 in der aus Fig. 11 ersichtlichen Anordnung nebeneinander erwünscht, dann werden die Rasthaken 132'' eines Untersatzes von oben her formschlüssig mit den Rastschlitzen 131'' des benachbarten Untersatzes in Halteeingriff gebracht.

Die Aufstellung mehrerer Behälter 101 nebeneinander entsprechend den Fig. 10 und 11 kommt insbesondere dann in Frage, wenn an Montageplätzen in der Industrie Vorrichtungen zur Bevorratung und Abgabe von Kleinteilen geschaffen werden müssen, die einerseits eine ergonomisch günstige Stellung relativ zueinander erhalten sollen, andererseits aber zur erleichterten Handhabung beim Befüllen mit Kleinteilen transportabel sein sollen.

Natürlich läßt sich im Bedarfsfalle der Untersatz 127 auch dann am Behälter befestigen, wenn dieser als Streuvorrichtung für körniges Gut, insbesondere Salz, Sand, Dünger, Samen oder dergleichen in Benutzung genommen wird. Das ist besonders dann zweckmäßig, wenn bei der Handhabung der Streuvorrichtung eine Vergrößerung des Streusektors gewünscht wird. Aufgrund der Vergrößerung der Dosierschaufel ergibt sich nämlich bei einer Drehung des Behälters 101 um seine Längsachse eine erhöhte Fliehkraftwirkung, die eine entsprechende Vergrößerung des Streusektors nach sich zieht.

Bezugszeichenübersicht

| | |
|---|---|
| 1 | Behälter |
| 2 | Bügelgriff |
| 3 | Deckel |
| 4 | Rutsche |
| 5 | Ende |
| 6 | Auslauf- und/oder Streuöffnung |
| 7 | Befestigungsabschnitt |
| 8 | Dosierschaufel |
| 9 | Streugut |
| 10 | Ausschnitt |
| 11 | Knebel- oder Flügelmutter |
| 12 | Gewindebolzen |
| 13 | Druckfeder |
| 101 | Behälter |
| 101' | Behälterwand |
| 101'' | Zargenrand |
| 102 | Bügelgriff |
| 103 | Klappdeckel |
| 103' | Steg |
| 104 | Scharnier |
| 105 | Rastvorrichtung |
| 106 | Auslauf- und/oder Streuöffnung |
| 107 | Rutsche |
| 108 | Leitfläche |
| 109 | Dosierschaufel |
| 110 | Schieber |
| 111 | Rahmen |
| 112 | Leiste |
| 113 | Stelltrieb |
| 114 | Gewindespindel |
| 114' | Gewindeabschnitt |
| 115 | Rändelmutter |
| 116 | Kopf |
| 117 | Halteklaue |
| 118 | Widerlagerfläche |
| 119 | Gegenmutter |
| 120 | Lagerauge |
| 121 | Lagerauge |
| 122 | Bügel |
| 123 | Griffteil |
| 124 | Anschlag |
| 125 | Rastklaue |
| 126 | Rippe |
| 127 | Untersatz |
| 128 | Nocken |
| 129 | Steg |
| 130 | Verlängerung |
| 130' | Seitenwand |
| 130'' | Mulde |
| 131' | Rastschlitz |
| 131'' | Rastschlitz |
| 132' | Rasthaken |
| 132'' | Rasthaken |
| 133 | Loch |
| 134 | Loch |
| 135 | Nocken |

**Patentansprüche**

1. Vorrichtung zur Bevorratung und Abgabe von Kleinteilen und/oder zum Streuen von körnigem Gut, insbesondere Salz, Sand, Dünger, Samen oder dergleichen, bestehend aus einem das Gut aufnehmenden Behälter (1, 101) mit einem als Rutsche (4, 107) ausgebildeten Boden und mindestens einer an der Rutsche (4, 107) anschließenden Auslauf- und/oder Streuöffnung (6, 106) die einem bestimmten Umfangsbereich des Behälters zugeordnet und von einer mit ihrem freien Ende radial nach auswärts gerichteten Schaufel untergriffen ist, dadurch gekennzeichnet, daß die Dosierschaufel (8, 109) horizontal verläuft oder geringfügig gegenüber der Horizontalen nach unten geneigt ist, daß der Behälter (1, 101) mit einer Einfüllöffnung versehen ist, und daß am oberen Ende des Behälters (1, 101) ein Bügelgriff (2, 102) angebracht ist, der ein Drehen des Behälters von Hand um seine Vertikalachse erlaubt.

2. Vorrichtung nach Anspruch 1, dadurch gekennzeichnet, daß die Rutsche (4 bzw. 107) sich von der Auslauf- und/oder Streuöffnung (6 bzw. 106) aus mit gleichbleibender Neigung über den gesamten Behälterquerschnitt erstreckt.

3. Vorrichtung nach den Ansprüchen 1 oder 2, dadurch gekennzeichnet, daß das untere Ende (5) der Rutsche (4) mit dem benachbarten Umfangsbereich des Behälters (1) eine etwa segment- oder linsenquerschnittsförmige Auslauf- und/oder Streuöffnung (6) begrenzt, unterhalb der das freie Ende der Dosierschaufel (8) liegt.

4. Vorrichtung nach mindestens einem der Ansprüche 1 bis 3, dadurch gekennzeichnet, daß die Dosierschaufel (8) relativ zur Auslauf- und/oder Streuöffnung höhen- und/oder neigungsverstellbar ist.

5. Vorrichtung nach mindestens einem der Ansprüche 1 bis 4, dadurch gekennzeichnet, daß die Dosierschaufel (8) durch Federkraft auf einstellbarem Abstand von der Auslauf- und/oder Streuöffnung (6) gehalten und entgegen der Kraft der Feder (13) als Verschlußglied gegen die Auslauf- und/oder Streuöffnung (6) anlegbar ist.

6. Vorrichtung nach Anspruch 1, dadurch gekennzeichnet, daß die Auslauf- und/oder Streuöffnung (106) in einer Seitenwand (101') am unteren Ende des im Querschnitt polygonförmigen Behälters (101) ausgebildet sowie durch einen parallel zu dieser Seitenwand (101') bewegbaren Schieber (110) verschließbar und in ihrer Größe stufenlos veränderbar ist.

7. Vorrichtung nach den Ansprüchen 1 und 6, dadurch gekennzeichnet, daß die Auslauf- und/oder Streuöffnung (106) schmaler als die sie aufweisende Seitenwand (101') des Behälters (101) ausgebildet ist und die innerhalb des gesamten Gehäusequerschnitts auf die Auslauf- und/oder Streuöffnung (106) zu geneigte Rutsche (107) im Anschluß an die Auslauf- und/oder Streuöffnung (106) seitlich und nach oben gerichtete, zwickelartige Leitflächen (108) trägt, die mit ihrem unteren Ende bis an die Dosierschaufel (109) heranreichen.

8. Vorrichtung nach den Ansprüchen 6 oder 7, dadurch gekennzeichnet, daß der Schieber (110) in einer von einem auf der Gehäuseaußenseite sitzenden Rahmen (111) begrenzten Führung läuft und über einen aus einer Gewindespindel (114) und einer Rändelmutter (115) oder dergleichen bestehenden Stelltrieb (113) bewegbar ist.

9. Vorrichtung nach mindestens einem der Ansprüche 6 bis 8, dadurch gekennzeichnet, daß das an die Rutsche (107) anschließende freie Ende der Dosierschaufel (109) vom unteren Schenkel des Rahmens (111) gebildet ist.

10. Vorrichtung nach einem oder mehreren der Ansprüche 1 bis 9, gekennzeichnet durch einen dem Behälter (1, 101) zugeordneten, plattenartigen Untersatz (127), der einerseits mit auf seiner Oberseite sitzenden Nocken (128) und/oder Stegen (129) fixierend in einen fußseitigen Zargenrand (101") des Behälters (1) beziehungsweise (101) eingreift und andererseits eine an die Dosierschaufel (8) beziehungsweise (109) des Behälters (1) beziehungsweise (101) anschließende Verlängerung (130) aufweist.

11. Vorrichtung nach Anspruch 10, dadurch gekennzeichnet, daß die Verlängerung (130) des Untersatzes (127) als durch Seitenwände (130') begrenzte, gegen die Dosierschaufel (109) abgesetzte Mulde ausgebildet ist.

12. Vorrichtung nach den Ansprüchen 10 und 11, dadurch gekennzeichnet, daß der Untersatz (127) in seinem hinteren Teilbereich der Umrißform des Zargenrandes (101") des Behälters (1) beziehungsweise (101) angepaßt ist, während seine Verlängerung (130) sich trapezförmig nach vorne verjüngt.

## Claims

1. Apparatus for storing and distributing small elements and/or for spreading material in granule form, more especially salt, sand, fertilisers, seeds or the like, consisting of a container (1, 101) holding the material and having a base constructed as a slide or chute (4, 107) and at least one outlet and/or spreading opening (6, 106) which adjoins the chute (4, 107), which outlet or opening is associated with a specific peripheral zone of the container and beneath which is arranged a spade-like member directed radially outwards at its free end, characterised in that the measuring spade-like member (8, 109) extends horizontally or slopes slightly downwards with respect to the horizontal, that the container (1, 101) is provided with a filling opening and that the upper end of the container (1, 101) has arranged thereon a bowed handle (2, 102), which permits the container to be rotated manually about its vertical axis.

2. Apparatus according to Claim 1, characterised in that the chute (4 or 107) extends from the outlet and/or spreading opening (6 or 106) at a constant slope over the full cross-section of the container.

3. Apparatus according to Claim 1 or 2, characterised in that the bottom end (5) of the chute (4) defines, with the adjoining peripheral zone of the container (1), an outlet or spreading opening (6) which is approximately segmental or lenticular in cross-section and beneath which is situated the free end of the measuring spade member (8).

4. Apparatus according to at least one of Claims 1 to 3, characterised in that the measuring spade (8) is adjustable in height and/or inclination relatively to the outlet or spreading opening (6).

5. Apparatus according to at least one of Claims 1 to 4, characterised in that the measuring spade (8) is held by spring force at an adjustable distance from the outlet and/or spreading opening (6) and is adapted to be applied, against the force of the spring (13), as a closure member against the outlet and/or spreading opening (6).

6. Apparatus according to Claim 1, characterised in that the outlet and/or spreading opening (106) is formed in one side wall (101') at the bottom end of the container (101), which is polygonal in cross-section, and is also capable of being closed and infinitely variable as regards its size by a slide member (110) which is movable parallel to the said side wall (101').

7. Apparatus according to Claims 1 and 6, characterised in that the outlet and/or spreading opening (106) is made narrower than that side wall (101') of the container (101) in which it is formed and the chute (107), which slopes within the entire housing cross-section towards the outlet and/or spreading opening (106) carries laterally and upwardly directed wedge-like guide surfaces (108) adjoining the outlet and/or spreading opening (106), which surfaces reach the measuring spade (109) at their bottom ends.

8. Apparatus according to Claim 6 or 7, characterised in that the slide member (110) runs in a guideway defined by a frame (111) fitting on the outside of the housing and is movable by means of an adjusting gear (113) consisting of a threaded spindle (114) and a knurled nut (115) or the like.

9. Apparatus according to at least one of the Claims 6 to 8, characterised in that that free end of the measuring spade (109) which is connected to the chute (107) is formed by the bottom side of the frame (111).

10. Apparatus according to one or more of Claims 1 to 9, characterised by a plate-like support (127) which is associated with the container (1, 101) and which engages on its one side by means of bosses (128) and/or bars (129) arranged on its upper side and with a fixing action in a bottom framing rim (101") of the container (1) or (101) and comprises on its other side an extension (130) adjoining the measuring spade (8) or (109) of the container (1) or (101).

11. Apparatus according to Claim 10, characterised in that the extension (130) of the support (127) is formed as a through defined by side walls (130') and set back towards the measuring spade (109).

12. Apparatus according to Claims 10 and 11, characterised in that the support (127) is adapted in its rearward partial zone to the peripheral form of the framing rim (101'') of the container (1) or (101), while its extension (130) is tapered trapezoidally towards the front.

**Revendications**

1. Dispositif de stockage et de distribution de petites pièces et/ou d'épandage de matière granuleuse, notamment de sel, d'engrais, de graines ou autres produits analogues, composé d'un récipient (1, 101) qui reçoit le contenu, avec un fond en forme de plan incliné (4, 107) et au moins une ouverture de sortie et/ou d'épandage (6, 106) affectée à une partie déterminée du pourtour du récipient et au-dessous de laquelle se trouve une pelle dont l'extrémité libre est dirigée radialement vers l'extérieur, caractérisé par le fait que la pelle doseuse (8, 109) s'étend horizontalement ou est inclinée légèrement vers le bas par rapport à l'horizontale, que le récipient (1, 101) est muni d'une ouverture de remplissage, et qu'à l'extrémité supérieure du récipient (1, 101) est fixée une poignée en forme d'étrier (2, 102) qui permet de faire tourner le récipient à la main autour de son axe vertical.

2. Dispositif selon la revendication 1, caractérisé par le fait que le plan incliné (4 ou 107) s'étend depuis l'ouverture de sortie et/ou d'épandage (6 ou 106) avec une inclinaison constante sur toute la section du récipient.

3. Dispositif selon la revendication 1 ou 2, caractérisé par le fait que l'extrémité inférieure (5) du plan incliné (4) délimite, avec la partie périphérique adjacente du récipient (1), une ouverture de sortie et/ou d'épandage (6) sensiblement en forme de segment ou lenticulaire, au-dessous de laquelle se trouve l'extrémité libre de la pelle doseuse (8).

4. Dispositif selon au moins une des revendications 1 à 3, caractérisé par le fait que la pelle doseuse (8) est réglable en hauteur et/ou en inclinaison par rapport à l'ouverture de sortie et/ou d'épandage.

5. Dispositif selon au moins une des revendications 1 à 4, caractérisé par le fait que la pelle doseuse (8) est, par la force d'un ressort, maintenue à une distance réglable de l'ouverture de sortie et/ou d'épandage (6) et peut, contre la force de ce ressort (13), être appliquée en tant qu'organe de fermeture contre l'ouverture de sortie et/ou d'épandage.

6. Dispositif selon la revendication 1, caractérisé par le fait que l'ouverture de sortie et/ou d'épandage (106) est ménagée dans une paroi latérale (101') à l'extrémité inférieure du récipient de section polygonale (101), cette ouverture pouvant être, par un registre (110) déplaçable parallèlement à la dite paroi (101'), obturée et réglée progressivement en grandeur.

7. Dispositif selon la revendication 1 et 6, caractérisé par le fait que l'ouverture de sortie et/ou d'épandage (106) est plus étroite que la paroi latérale (101') qui la comporte, et que le plan incliné (107), qui dans l'ensemble de la section du récipient est incliné en direction de l'ouverture de sortie et/ou d'épandage, porte des faces de guidage (108) analogues à des portions de cône, raccordées à l'ouverture de sortie et/ou d'épandage (106) et dont l'extrémité inférieure s'étend jusqu'à la pelle doseuse (109).

8. Dispositif selon la revendication 6 ou 7, caractérisé en ce que le registre (110) coulisse dans un guidage délimité par un cadre (111) sur la face extérieure du récipient et peut être déplacé par l'intermédiaire d'un mécanisme de manœuvre (113) constitué par une broche filetée (114) et un écrou moleté (115) ou autre mécanisme analogue.

9. Dispositif selon au moins une des revendications 6 à 8, caractérisé par le fait que l'extrémité libre de la pelle doseuse (109) qui fait suite au plan incliné (107) est formée par le côté inférieur du cadre (111).

10. Dispositif selon une ou plusieurs des revendications 1 à 9, caractérisé par une embase en forme de plateau (127) affectée au récipient (1, 101), qui d'une part, par des mamelons (128) et/ou nervures (129) sur sa face supérieure, pénètre dans un rebord formant feuillure (101'') au pied du récipient (1) respectivement (101) et, d'autre part, présente un prolongement (130) qui fait suite à la pelle doseuse (8) respectivement (109) du récipient (1) respectivement (101).

11. Dispositif selon la revendication 10, caractérisé par le fait que le prolongement (130) de l'embase (127) est conçu en forme d'auge délimitée par des flancs (130') et en retrait par rapport à la pelle doseuse (109).

12. Dispositif selon les revendications 10 et 11, caractérisé par le fait que l'embase (127) est, dans le champ de sa partie arrière, adaptée à la forme du contour du rebord en feuillure (101'') du récipient (1) respectivement (101), tandis que son prolongement (130) va en se rétrécissant en forme de trapèze vers l'avant.

Fig. 1

Fig. 2

Fig. 3

Fig. 4

Fig. 6

Fig. 5

Fig. 8

**Fig. 7**

101'

**Fig. 10**

**Fig. 9**

**Fig. 11**